# EUROPEAN PATENT APPLICATION

(11) **EP 1 458 222 A1**
(43) Date of publication of application: **15.09.2004**
(21) Application number: 04251306.9
(22) Date of filing: 05.03.2004
(51) Int. Cl.: H05B 37/03, B60Q 11/00, B60Q 1/26

(54) **Lamp failure warning device**

(30) Priority: 14.03.2003 GB 0305842
(71) Applicant: Britax PMG Limited, Warwick CV34 6DE (GB)
(72) Inventor: Taylor, Paul Anthony, East Ridding Yorkshire YO25 5HA (GB)
(74) Representative: Waddington, Richard

(57) **Abstract**

A failure warning device for an LED comprises a first resistor (R1) connected in series with the LED, a second resistor (R3, R4) connected in parallel with the LED, and control means (IC) responsive the voltage across the second resistor (R3, R4) arranged to operate a switch (Q2) for connecting a load resistor (R10) in parallel with the LED when the current flowing through the LED (D1) exceeds a threshold value.

## Description

This invention relates to a lamp failure warning device and more particularly to a failure warning device for a light emitting diode (hereinafter called an LED).

It is a requirement of ECE Regulation 48 to have a tell tale signal to the driver of a vehicle that will warn of an inoperative turn signal lamp. Some conventional flasher units incorporate this feature by increasing the flash rate when one of the turn signal lamps fails. Alternatively, a separate output may be provided to energise a visible or audible signal. In either case, the flasher unit determines whether a lamp has failed by monitoring the current being drawn by all the turn signal lamps. If this falls below a predetermined threshold then the failure signal is activated.

Increasingly, it is becoming customary to use LED's as vehicle signal lamps. However if an LED is connected to a flasher unit that has been designed to function with conventional filament lamps, the lamp failure signal will be permanently activated. This is because of the reduced current consumption of an LED compared with that of a filament lamp producing a comparable light output. It is possible to connect a resistor of an appropriate value in parallel with the LED in order to simulate the current drawn by the corresponding filament lamp. However, while this will prevent continuous activation of the bulb failure signal, it will also prevent activation in the event that the LED fails, because the current drawn by the load resistor alone would be sufficient to keep the flasher unit in normal operation. Consequently such a device would not meet the regulation.

US-B-6490512 discloses a device of this type in which a diagnostic circuit associated with a group of such LED's is arranged to apply, to the supply conductor of the LED's, a pulse width modulated signal indicating the nature of a malfunction. A switching and evaluation logic unit is arranged to decode and display this information. The present invention aims to provide a simpler device that can be used in conjunction with a conventional flasher unit.

According to the invention, a failure warning device for an LED comprises current sensing means for determining whether the current flowing through the LED exceeds a threshold value and switch means for connecting a load resistor in parallel with the LED when said threshold current is exceeded.

In one form of the invention, the current sensing means comprises a first resistor connected in series with the LED, a second resistor connected in parallel with the LED, and control means responsive the voltage across the second resistor.

When such a failure warning device and LED are connected in a vehicle turn signal circuit in place of a filament lamp, the LED and the load resistor together draw a comparable current to that drawn by the filament lamp that they have replaced. If the LED fails, the current in the first resistor is reduced, resulting in a decrease in the current therethrough and a consequent increase in the voltage across the second resistor. The detector means responds to this increase in voltage to open the switch so that the remaining current drawn by the device is insufficient to prevent the activation of the lamp failure warning.

Preferably the second resistor comprises third and fourth resistors connected in series with one another. The resistance value of the first resistor is sufficiently low, compared with that of the third and fourth resistors, to have negligible effect on the voltage at the connection between the third and fourth resistors when no current is passing through the light emitting diode.

The detector means may comprise a further series chain formed by fifth and sixth resistors connected in parallel with the first, third and fourth resistors and a comparator arranged to sense the voltage difference between the junction between the third and fourth resistors and the junction between the fifth and sixth resistors, the output of the comparator being connected to control the switch.

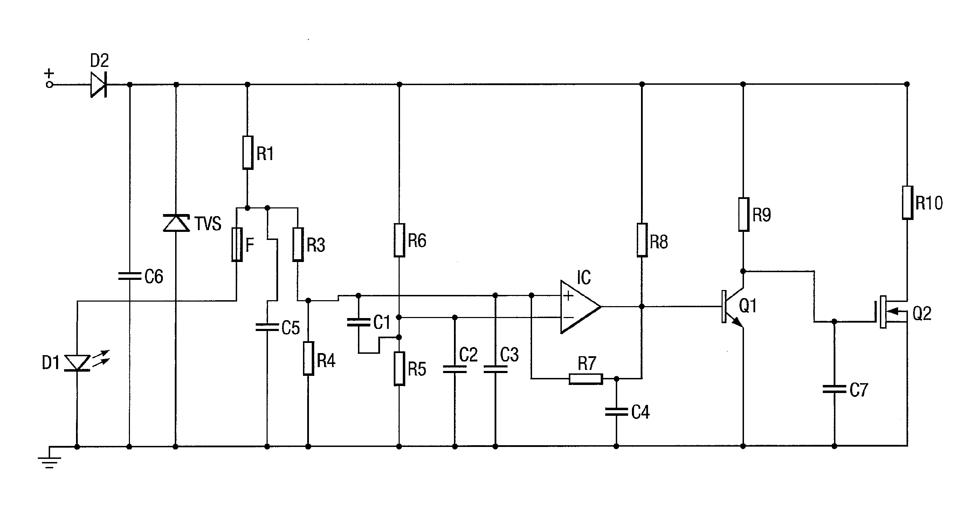

An embodiment of the invention will be described, by way of example, with reference to the accompanying drawing which is a schematic circuit diagram of a failure warning device.

In the drawing, an LED D1 is connected in series with a fuse F, a first resistor R1 and a diode D2 (which provides reverse polarity protection) to the positive output from a flasher unit. A zener diode TVS is connected in parallel with the LED D1, the fuse F and the first resistor R1 to provide transient overvoltage protection. A series chain of two resistors R3 and R4 is connected in parallel with the LED D1 and the fuse F. The junction of the resistors R3 and R4 is connected to the non-inverting input of a comparator IC, the inverting input of which is connected to the junction between two further resistors R5 and R6 that are connected in series with one another to the power supply from the diode D2. The values of the resistors R3, R4, R5 and R6 are chosen such that the voltage at the non-inverting input of the comparator IC is higher than the voltage at the inverting input when no current is flowing through the LED D1. The value of the first resistor R1 is chosen such that the additional voltage drop created when the LED D1 is drawing at least 20% of its nominal current is sufficient to lower the voltage at the non-inverting input of the comparator IC to below the voltage at the inverting input thereof.

Whenever the voltage at the non-inverting input is below that at the inverting input, the driver transistor Q1 is turned off, thus allowing the resistor R9 to pull the gate of a field-effect transistor Q2 high, thus connecting a load resistor R10 to ground. The resistance of R10 is substantially equal to that of the equivalent filament lamp when energised (i.e. when its filament is hot).

With this arrangement, if the LED D1 fails to an open circuit condition, the gate of the field-effect transistor Q2 goes low, thus disconnecting the load resistor R10 from ground. On the other hand, if the LED D1 fails to short circuit, the fuse F blows and, once again, the gate of the field-effect transistor Q2 goes low.

The capacitors C1 to C7 are included solely to improve the electromagnetic immunity of the circuit.

The circuit thus provides a load equivalent to that of a filament lamp, such load being switched on or off depending on the functional status of the LED D1.

## Claims

1. A failure warning device for an LED comprising current sensing means for determining whether the current flowing through the LED (D1) exceeds a threshold value, **characterised by** switch means (Q2) for connecting a load resistor (R10) in parallel with the LED when said threshold current is exceeded.

2. A failure warning device according to claim 1, wherein the current sensing means comprises a first resistor (R1) connected in series with the LED, a second resistor (R3, R4) connected in parallel with the LED, and control means (IC) responsive the voltage across the second resistor (R3, R4).

3. A failure warning device according to claim 2, wherein the second resistor comprises third and fourth resistors (R3, R4) connected in series with one another.

4. A failure warning device according to claim 1, 2 or 3, wherein the detector means comprises a further series chain formed by fifth and sixth resistors (R5, R6) connected in parallel with the first, third and fourth resistors (R1, R3, R4) and a comparator (IC) arranged to sense the voltage difference between the junction between the third and fourth resistors (R3, R4) and the junction between the fifth and sixth resistors (R5, R6), the output of the comparator being connected to control the switch (Q2).
